# EUROPEAN PATENT APPLICATION

(11) **EP 4 729 277 A1**
(43) Date of publication of application: **22.04.2026**
(21) Application number: 24823415.5
(22) Date of filing: 12.06.2024
(51) Int. Cl.: B29C 65/40, B29C 65/70

(54) **METHOD FOR MANUFACTURING JOINED BODY, AND ELECTRIC-ELECTRONIC COMPONENT**

(30) Priority: 15.06.2023 JP 2023098615
(71) Applicant: Resonac Corporation, Tokyo 105-7325 (JP)
(72) Inventor: TAKAHASHI, Nobuyuki, Tokyo 105-7325 (JP); SAITO, Hayato, Tokyo 105-7325 (JP)
(74) Representative: Strehl & Partner mbB
(86) International application number: PCT/JP2024/021358
(87) International publication number: WO 2024/257800

(57) **Abstract**

A method for producing a joined object including a columnar base material A, a thermoplastic film B, and a resin C joined in this order, the method including in this order: a step 1 of winding the thermoplastic film B around at least a part of an outer periphery of the columnar base material A in a peripheral direction, and a step 2 of joining the resin C to a part of the columnar base material A having the thermoplastic film B wound; wherein the thermoplastic film B having a shear adhesion force to the columnar base material A at 80°C of 4.0 MPa or more, and the thermoplastic film B having a peak value of tanδ of 1.0 or more in a temperature range of 0°C or more and 200°C or less on a temperature-tanδ curve in heating from 0°C to 200°C at a rate of 4°C/min at a measurement frequency of 10 Hz.

## Description

### Technical Field

The present invention relates to a method for producing a joined object including dissimilar materials that are joined to each other, and an electric/electronic component.

### Background Art

In recent years, from the standpoint of the weight reduction, the high performance in products, and the like, multi-materialization of components has advanced in various fields, such as automobile components, medical devices, and home electric appliances. The multi-materialization is a method for reducing the weight of materials and increasing the strength thereof by using materials that are different in function and material type (which may be hereinafter referred to as dissimilar materials) in combination. In order to realize the multi-materialization, a technique for firmly joining dissimilar materials is indispensable.

One example of a product using a component requiring the multi-materialization is a terminal block. The terminal block of an external chassis of battery cases, inverters, motors, and the like is equipped inside with at least an insulator and an electrode body. In many electrode bodies, a metal component extends from a through hole of the external chassis in order to exchange electricity with the outside. In order to protect the inside of the external chassis from problems, such as deterioration due to the atmosphere, for example, a method of sealing the gap between the electrode body and the through hole by using a resin material as a sealing material is adopted. In particular, electronic devices often cause malfunctions due to slight moisture or powder dust, and thus high adhesiveness (leakage resistance) is required for the sealing portion.

For example, a technique is known in which a resin material serving as a sealing material is used to seal the periphery of the metal terminals by insert molding, such as injection molding. However, the use of the resin material for sealing the metal by insert molding causes a risk of leakage from the gap. In particular, in sealing the resin material so as to cover the periphery of a metal terminal or the like, more excellent leakage resistance is required.

Therefore, as a means for sealing the metal terminal or the like with a resin material, for example, a method in which a liquid adhesive, a varnish, or the like is applied to the metal terminal, and then the metal terminal is sealed with the resin material by insert molding has been studied. Specifically, a technique is known in which a primer layer is provided by applying an in-situ polymerization type composition to an electrode body and polymerizing the composition, and then a sealing portion is formed (see PTL 1 or the like). A technique is also known in which an external terminal is immersed in a bath filled with a cationic epoxy resin-based electrodeposition coating material, a terminal adhesive layer is provided by electrifying the external terminal, and then a sealing member is formed (see PTL 2 or the like).

Furthermore, a method of sealing a metal terminal with a resin material by insert molding after roughening the surface of the metal terminal has been studied. Specifically, a technique in which a surface layer of a joint surface of the metal terminal with the sealing resin is polished by mechanical polishing such as sandblasting, shot blasting, grinding, and barrel processing, or chemical polishing has been known (see PTL 3 or the like).

### Citation List

### Patent Literature

PTL 1: JP 2021-157887 A
PTL 2: JP 2020-88137 A
PTL 3: JP 2016-126989 A

### Summary of Invention

### Technical Problem

The potting method can prevent invasion of external atmosphere, such as water, even though a gap occurs. However, as the thermosetting resin is in a liquid state in potting, there are not only a problem of complicated handling of the liquid material, but also a problem in productivity due to the thermal curing requiring heating or still standing for a prolonged period of time.

In the case where the metal surface is roughened in advance as in PTL 1, due to the absence of a layer that relaxes the stress of the metal that is repeatedly exposed to high temperatures and low temperatures (i.e., in a thermal cycle), the sealing resin tends to peel off due to the stress applied thereto, causing a problem in weather resistance of adhesiveness. Furthermore, a gap tends to occur between the roughened metal surface and the sealing resin, causing a concern of shortage in adhesiveness.

In the case where a liquid adhesive, a varnish, or the like is applied to a metal in advance as in PTL 2, as the adhesive in a liquid state in applying, there may be a case where a prolonged period of time is required for adhering, which tends to cause problems in pot life (usable time) and handling. Furthermore, the adhesiveness may be impaired due to the shortage in coating amount and an uneven coating operation, and a contamination risk may occur due to an excessive coating amount, resulting in poor workability.

In the case where a thermosetting adhesive is used, the metal and the resin may be displaced in a thermal cycle due to the difference in linear expansion coefficient between the metal and the sealing resin, and a stress is applied to the adhesive layer, which fails to relax the stress and peels off due to the stress applied thereto, so that leakage tends to occur. This is considered to be because the thermosetting adhesive layer does not have thermoplasticity and is rapidly broken on reaching the plastic deformation region.

Under the circumstances, an object of the present invention is to provide a method for producing a joined object that is produced in a short joining process time, is difficult to peel off in a thermal cycle, and is excellent in adhesiveness, and an electric/electronic component.

### Solution to Problem

The present inventors have found that the problems can be solved by joining a resin material and a base material via a particular thermoplastic film.

Specifically, the present invention is as follows.

[1] A method for producing a joined object including a columnar base material A, a thermoplastic film B, and a resin C joined in this order,
   the method including in this order:
   a step 1 of winding the thermoplastic film B around at least a part of an outer periphery of the columnar base material A in a peripheral direction, and
   a step 2 of joining the resin C to a part of the columnar base material A having the thermoplastic film B wound; wherein
   the thermoplastic film B having a shear adhesion force to the columnar base material A at 80°C of 4.0 MPa or more, and
   the thermoplastic film B having a peak value of tanδ of 1.0 or more in a temperature range of 0°C or more and 200°C or less on a temperature-tanδ curve in heating from 0°C to 200°C at a rate of 4°C/min at a measurement frequency of 10 Hz.
[2] The method for producing a joined object according to the item [1], in which the method further includes a step of joining the columnar base material A and the thermoplastic film B by at least one kind selected from the group consisting of contact heating, hot air heating, hot pressing, infrared heating, hot plate welding, ultrasonic welding, vibration welding, and high-frequency induction welding.
[3] The method for producing a joined object according to the item [1] or [2], in which the thermoplastic film B has a thickness of 10 µm or more and 3 mm or less.
[4] The method for producing a joined object according to any one of the items [1] to [3], in which the thermoplastic film B contains an amorphous thermoplastic resin in an amount exceeding 50% by mass.
[5] The method for producing a joined object according to the item [4], in which the amorphous thermoplastic resin is at least one kind selected from the group consisting of a thermoplastic epoxy resin and a phenoxy resin.
[6] The method for producing a joined object according to any one of the items [1] to [5], in which the thermoplastic film B is a thermoplastic resin having an epoxy equivalent of 1,600 g/eq. or more or containing no epoxy group.
[7] The method for producing a joined object according to any one of the items [1] to [6], in which the columnar base material A is a metal.
[8] An electric/electronic component including a joined object obtained by the method for producing a joined object according to any one of the items [1] to [7].

### Advantageous Effects of Invention

The present invention can provide a method for producing a joined object that is produced in a short joining process time, is difficult to peel off in a thermal cycle, and is excellent in adhesiveness, and an electric/electronic component.

### Brief Description of Drawings

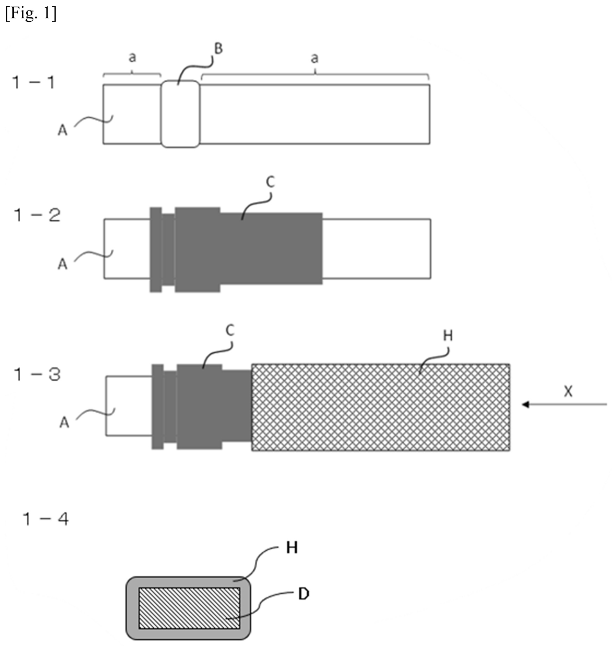

[Fig. 1] Fig. 1 is a schematic illustration showing a configuration of one embodiment of a joined object obtained by the method for producing a joined object of the present embodiment.

### Description of Embodiments

Embodiments of the present invention will be described in detail below.

In the description herein, the term "joining" means joining objects to each other, and adhesion and welding are subordinate concepts thereof. The term "adhesion" means that two adherends (objects to be adhered) are brought into a joined state via an organic material (such as a thermosetting resin or a thermoplastic resin), such as a tape or an adhesive. The term "welding" means that the surface of a thermoplastic resin or the like is melted by heat, and a joined state is provided by utilizing entanglement due to molecular diffusion and solidification occurring in the process of cooling. The "adhesion property" means a capability exhibiting an adhesion strength capable of connecting an object to another object. The "adhesiveness" means an extent of an adhesive strength between an object and another object. The "adhesion property" and the "adhesiveness" mean properties that are different from each other.

In the description herein, the "joining process time" means a time from the start point to the end point, in which the start point is the time of contact between the columnar base material and the film constituting the joined object, and the end point is the time of completion of the production of the joined object.

In the description herein, the description "A to B" showing a numerical range means a numerical range encompassing the end points, A and B, and therefore means "A or more and B or less" (for the case of A < B), or "A or less and B or more" (for the case of A > B).

### <Method for producing Joined Object>

The method for producing a joined object of the present embodiment is a method for producing a joined object including a columnar base material A, a thermoplastic film B, and a resin C joined in this order,
the method including in this order: a step 1 of winding the thermoplastic film B around at least a part of an outer periphery of the columnar base material A in a peripheral direction, and a step 2 of joining the resin C to a part of the columnar base material A having the thermoplastic film B wound,
the thermoplastic film B having a shear adhesion force to the columnar base material A at 80°C of 4.0 MPa or more,
the thermoplastic film B having a peak value of tanδ of 1.0 or more in a temperature range of 0°C or more and 200°C or less on a temperature-tanδ curve in heating from 0°C to 200°C at a rate of 4°C/min at a measurement frequency of 10 Hz.

The thermoplastic film B is provided between the columnar base material A and the resin C, which is a sealing material, and thereby the columnar base material A and the resin C are difficult to peel off from each other even after undergoing a thermal cycle, and are joined with excellent adhesiveness. Furthermore, the operation of bringing the thermoplastic film B into contact directly with the columnar base material A can be said to be effective for shortening the joining process as compared to the application of a liquid joining agent or the like. Moreover, the use of the thermoplastic film B having a uniform thickness can prevent uneven portions, such as an uncoated area and sagging, from occurring as compared to the application of a liquid joining agent or the like, and thereby the excellent adhesiveness can be exhibited.

The more detailed mechanism that achieves the effects of the present invention is considered as follows.

Due to the difference in linear expansion between the metal and the sealing resin, the metal and the sealing resin move relatively in the shear direction. While the movement in the shear direction similarly occurs in the sealing resin/adhesive layer and the metal/adhesive layer, the sealing resin/adhesive layer undergoes a smaller shear movement, whereas the metal/adhesive layer undergoes a larger movement since the adhesive layer is a resin composition. Therefore, corresponding to the movement in the shear direction in the metal/adhesive layer, a deformation in the shear direction occurs around the interface to the adhesive layer, and a stress occurs in the adhesive layer corresponding to the deformation of the adhesive layer. The metal and the sealing resin peel off from each other in the case where the adhesive layer or the adhesive layer/metal interface is fractured through the stress.

In the aforementioned description, "/" means the boundary of the layers.

In the present embodiment, the thermoplastic film B, which has been completed in chemical reaction, such as polymerization, is provided as an adhesive layer between the columnar base material A and the resin C, and thereby at the time when the temperature is increased beyond the glass transition temperature of the adhesive layer, the adhesive layer is softened through the thermoplasticity, significantly reducing the stress due to the deformation in the shear direction. At this time, the loss elastic modulus E" is increased with respect to the storage elastic modulus E', and the loss tangent, which is the ratio thereof tanδ = E"/E', exceeds 1 to cause a viscous range. On the other hand, the adhesion force is decreased at the time when the temperature is increased beyond the glass transition temperature, but the increase of the flexibility described above is more significant than the decrease in adhesion force, and thus the stress is decreased in a large extent, which is more significant than the decrease in adhesion force, thereby the metal and the sealing resin are not likely to be peeled off from each other.

Furthermore, at a high temperature (for example, 120°C or higher) in the thermal cycle, the adhesive layer is softened and transfers from the elastic range (where a stress occurs in proportion to the strain) to the viscous range (where the increase in stress is terminated in removing the external force) to reset the stress, and thereby the fatigue is not likely to be accumulated in a repeated thermal cycle and the peel-off is not likely to occur. Consequently, the use of the thermoplastic film B achieves plastic deformation, and simultaneously relaxes the stress effectively, thereby achieving the joined object that is difficult to undergo the peel-off in a thermal cycle and is excellent in adhesiveness.

Moreover, the use of the thermoplastic film B, which is in a solid state at ordinary temperature, as the adhesive layer avoids the handling of liquid in forming the adhesive layer, thereby simplifying the joining process. The joining process through adhesion includes only the phase transfer between solid and liquid due to the thermoplasticity thereof. Therefore, the use of the thermoplastic film B can shorten the joining process time for adhering to the columnar base material A, as compared to the case using a thermosetting resin associated with chemical reaction.

### (Columnar Base Material A)

The shape of the columnar base material A is not particularly limited. Examples of the shape of the columnar base material A include columnar shapes having cross sectional shapes, such as a circular shape, a semicircular shape, an elliptical shape, and various polygonal shapes including a square shape, a rectangular shape, and a triangular shape, and also include a strip shape and a plate shape, which have a rectangular cross sectional shape having a large aspect ratio.

Examples of the material used as the columnar base material A include a metal, an inorganic material, and a resin. One kind of the material of the columnar base material A may be used alone, or two or more kinds thereof may be used in combination.

The columnar base material A is preferably a metal from the standpoint of the heat resistance and the strength.

The metal used as the material of the columnar base material A is not particularly limited, and examples thereof include aluminum, iron, copper, magnesium, and titanium.

In the present embodiment, the term "iron" is used to include iron and alloys thereof. Examples of the alloys of iron include steel and stainless steel. Similarly, copper, aluminum, magnesium, and titanium are also used to include simple substances thereof and alloys thereof.

The surface of the metal may be subjected to a metal plating treatment depending on the application.

The inorganic material used as the material of the columnar base material A is not particularly limited, and examples thereof include glass, ceramic, and carbon molded object.

The glass may be, for example, heat-resistant glass, fire-proof glass, fire-resistant glass, or chemically strengthened glass used for protection of a smartphone or the like, in addition to general glass. Specific examples thereof include soda lime glass, lead glass, borosilicate glass, and quartz glass.

Examples of the ceramics include fine ceramics used for semiconductors, automobiles, industrial equipment, and the like. Specific examples thereof include oxide-based ceramics, such as alumina, zirconia, and barium titanate; hydroxide-based ceramics, such as hydroxyapatite; carbide-based ceramics, such as silicon carbide; and nitride-based ceramics, such as silicon nitride.

Examples of the resin used as the material of the columnar base material A include a glass fiber-reinforced thermosetting resin, a cured product of a thermosetting resin, such as an epoxy resin compound, a vinyl ester resin, and an unsaturated polyester, and high heat-resistant engineering plastics, such as a polyimide resin, polyetherimide, and polyether sulfone.

In the case where the material of the columnar base material A is a resin, it is necessary that the material of the resin has a melting point or a glass transition temperature that prevents deformation in joining in the step of joining (i.e., the step 2).

The columnar base material A may be subjected to a suitable pretreatment. The pretreatment is preferably a pretreatment of cleaning the surface thereof or a pretreatment of imparting unevenness to the surface. Specifically, in the case where the columnar base material A is made of aluminum, ceramic, or iron, at least one kind selected from the group consisting of a degreasing treatment, a UV ozone treatment, a blast treatment, a polishing treatment, a plasma treatment, and an etching treatment is preferred. In the case where the columnar base material A is made of fiber-reinforced plastics (FRP), polypropylene, polycarbonate, polymethyl methacrylate, polyetherimide, polyamide, or polybutylene terephthalate, at least one kind selected from the group consisting of a degreasing treatment, a UV ozone treatment, a blast treatment, a polishing treatment, a plasma treatment, and a corona discharge treatment is preferred.

Only one kind of the pretreatment may be performed, or two or more kinds thereof may be performed. As a specific method of the pretreatment, a known method can be used.

### (Thermoplastic Film B)

The thermoplastic film B contains a thermoplastic resin as a main component. The thermoplastic film B preferably has adhesion property to the columnar base material A.

In the description herein, the "main component" means a component having the highest content among the resin components in the thermoplastic film B. The content of the thermoplastic resin in the resin components is preferably 50% by mass or more, more preferably 70% by mass or more, and further preferably 90% by mass or more. The thermoplastic film B contains the resin component in an amount of preferably more than 50% by mass, more preferably 70% by mass or more, still more preferably 80% by mass or more, and particularly preferably 90% by mass or more.

The term "film" refers to a thin film formed from a resin composition containing a thermoplastic resin as a main component.

### <<tanδ>>

The thermoplastic film B has a peak value of tanδ of 1.0 or more in a temperature range of 0°C or more and 200°C or less of the thermoplastic film B on the temperature-tanδ curve in heating from 0°C to 200°C at a rate of 4°C/min at a measurement frequency of 10 Hz. In the case where multiple peaks of tanδ appear, the value of tanδ of the peak with the lowest temperature is used.

In the case where the peak value of tanδ is less than 1.0, the adhesive layer is in an elastic range, failing to have the sufficient flexibility, and the adhesive layer or the adhesive layer/metal interface is fractured, failing to prevent peel-off between the columnar base material A and resin C. The peak value of tanδ is preferably 100 or less, and more preferably 10 or less.

The tanδ is defined as the ratio of the storage shear elastic modulus and the loss shear elastic modulus, and is a value that is measured with a dynamic viscoelasticity analyzer.

In the present embodiment, the peak value of tanδ is obtained by measuring a test piece produced from the thermoplastic film B by using a dynamic viscoelasticity analyzer (DMA) (for example, Rheogel-E4000, available from UBM Co., Ltd.) under the following condition.
Size of test piece: thickness: 0.01 to 1 mm, width: 5 mm, length: 20 mm
Strain amount: 0.1 mm
Applied waveform: sine wave
Frequency: 10 Hz
Measurement temperature: 0 to 200°C (or until melting)
Temperature rise rate: 4°C/min

The tanδ (loss tangent) is the ratio of the storage shear elastic modulus (E") and the loss shear elastic modulus (E'), i.e., the value of E"/E', and the peak value of tanδ is a peak value of tanδ on the temperature-tanδ curve at a measurement frequency of 10 Hz obtained through the DMA measurement described above.

In the present embodiment, the more detailed measurement method of tanδ is described in the examples.

### <<Shear Adhesion Force>>

The thermoplastic film B has a shear adhesion force to the columnar base material A at 80°C of 4.0 MPa or more.

The shear adhesion force of the thermoplastic film B to the columnar base material A at 80°C is more preferably 5 MPa or more, and further preferably 6 MPa or more, from the standpoint of effectively suppressing the peel-off even after undergoing a thermal cycle. The shear adhesion force is preferably 50 MPa or less, and more preferably 40 MPa or less, from the standpoint of appropriately imparting the flexibility.

In the present embodiment, the shear adhesion force is obtained in such a manner that a test piece produced by joining two columnar base materials A through melting and solidification of the thermoplastic film B disposed between the columnar base materials A is allowed to stand at 80°C for 10 minutes or more, and then measured according to JIS K6850:1999 in an atmosphere at 80°C.

In the present embodiment, the more detailed measurement method of shear adhesion force is described in the examples.

In the description herein, the melting point of the thermoplastic resin means the endothermic peak temperature in melting measured by DSC. In the case where an endothermic peak is not obtained or the heat of fusion is 15 J/g or less, a temperature obtained by adding 70°C to the glass transition temperature is regarded as the melting point.

In the description herein, the glass transition temperature means a temperature at the start of descent of a DSC curve in the second cycle of a cycle in which the temperature is raised to 200°C by DSC, then cooled to 40°C or lower, and further heated to 200°C.

Specifically, the melting point and the glass transition temperature are values that are measured by the method described in the examples.

### <<Amorphous Thermoplastic Resin>>

The thermoplastic film B preferably contains an amorphous thermoplastic resin in an amount exceeding 50% by mass.

The content of the amorphous thermoplastic resin in the resin components in the thermoplastic film B is more preferably 60% by mass or more, further preferably 70% by mass or more, still further preferably 80% by mass or more, and most preferably 90% by mass or more, from the standpoint of sufficiently imparting the characteristics of the amorphous thermoplastic resin to the thermoplastic film B.

The amorphous thermoplastic resin refers to a resin that does not have crystals or has a small amount of crystals if any, and has a heat of fusion of 15 J/g or less.

The heat of fusion is calculated from the area of the endothermic peak of DSC (differential scanning calorimeter) and the weight of the thermoplastic resin component. In the case where an inorganic filler or the like is contained in the film, the heat of fusion is calculated from the weight of the thermoplastic resin component excluding the inorganic filler. Specifically, 2 to 10 mg of a sample is weighed and placed in an aluminum pan, the temperature is raised from 23°C to 200°C or higher at 10°C/min using DSC (DSC8231, manufactured by Rigaku Corporation) to obtain a DSC curve, and then the heat of fusion can be calculated from the area of the endothermic peak at the time of melting obtained from the DSC curve and the weighed value.

The heat of fusion of the amorphous thermoplastic resin is more preferably 11 J/g or less, further preferably 7 J/g or less, still further preferably 4 J/g or less, and it is particularly preferred that the endothermic peak is equal to or lower than the detection limit.

By using the thermoplastic film B containing an amorphous thermoplastic resin having a heat of fusion of 15 J/g or less as a main component, a rapid decrease in viscosity as seen in a conventional hot melt adhesive does not occur during heating, and a low viscosity (0.001 to 100 Pa·s) state is not reached even in a high temperature region of more than 200°C. Therefore, even in a molten state, the thermoplastic film B does not flow out from between the columnar base material A and the resin C, the thickness of the thermoplastic film B can be stably secured, and a high adhesiveness can be stably obtained.

From the standpoint of the sealing property and the toughness, the amorphous thermoplastic resin is preferably at least one kind selected from the group consisting of a thermoplastic epoxy resin and a phenoxy resin.

In particular, from the standpoint of the sealing property and the toughness, the thermoplastic film B more preferably contains, as a main component, an amorphous thermoplastic resin that is at least one of a thermoplastic epoxy resin and a phenoxy resin. In addition, from the standpoint of the sealing property and the toughness, it is further preferred that the thermoplastic film B contains, as a main component, an amorphous thermoplastic resin which is at least one of a thermoplastic epoxy resin and a phenoxy resin, has an epoxy equivalent of 1,600 g/eq. or more and a heat of fusion of 15 J/g or less.

Since the thermoplastic epoxy resin and the phenoxy resin have a low cohesive force in the resin and can have a hydroxy group, they have a strong interaction with the columnar base material A and the resin C, and thus it can be expected to join dissimilar materials with a higher joining force than conventional crystalline hot-melt adhesives.

In particular, from the standpoint of the storability, it is preferred that the thermoplastic film B is a thermoplastic resin having an epoxy equivalent of 1,600 g/eq. or more or containing no epoxy group.

The epoxy equivalent is more preferably 2,000 g/eq. or more, further preferably 5,000 g/eq. or more, still further preferably 9,000 g/eq. or more, and it is particularly preferred that the epoxy equivalent is equal to or higher than the detection limit and the epoxy group is not substantially detected. The epoxy equivalent being equal to or higher than the detection limit means that the epoxy group is not detected in the measurement of the epoxy equivalent based on JIS K 7236:2001 to be described later.

The epoxy equivalent (the weight of the thermoplastic resin containing 1 mol of epoxy group) described here is the value of the epoxy equivalent of the thermoplastic resin contained in the thermoplastic film B before joining, and is a value measured by a method defined in JIS K 7236:2001 (unit: "g/eq."). Specifically, the epoxy equivalent is a value obtained by adding a brominated tetraethylammonium acetic acid solution using a potentiometric titration apparatus, using a 0.1 mol/L perchloric acid-acetic acid solution, and calculating a numerical value of a solvent diluted product (resin varnish) as a value in terms of a solid content from a nonvolatile component. In the case of a mixture of two or more kinds of resins, the epoxy equivalent can also be calculated from the content and the epoxy equivalent of each resin.

### <<Thermoplastic Epoxy Resin>>

The thermoplastic epoxy resin is preferably a polymer of (a) a bifunctional epoxy resin monomer or oligomer and (b) a bifunctional compound having two identical or different functional groups selected from the group consisting of a phenolic hydroxy group, a carboxy group, a mercapto group, an isocyanate group, and a cyanate ester group.

By using such a compound, the polymerization reaction for forming a linear polymer proceeds preferentially, and a thermoplastic epoxy resin having desired properties can be obtained.

The bifunctional epoxy resin monomer or oligomer (a) refers to an epoxy resin monomer or oligomer having two epoxy groups in the molecule.

Specific examples of the bifunctional epoxy resin monomer or oligomer (a) include bisphenol A type epoxy resins, bisphenol F type epoxy resins, bifunctional phenol novolac type epoxy resins, bisphenol AD type epoxy resins, biphenyl type epoxy resins, bifunctional naphthalene type epoxy resins, bifunctional alicyclic epoxy resins, bifunctional glycidyl ester type epoxy resins (e.g., diglycidyl phthalate, diglycidyl tetrahydrophthalate, dimer acid diglycidyl ester), bifunctional glycidylamine type epoxy resins (e.g., diglycidyl aniline, diglycidyl toluidine), bifunctional heterocyclic epoxy resins, bifunctional diarylsulfone type epoxy resins, hydroquinone type epoxy resins (e.g., hydroquinone diglycidyl ether, 2,5-di-tert-butylhydroquinone diglycidyl ether, resorcin diglycidyl ether), bifunctional alkylene glycidyl ether-based compounds (e.g., butanediol diglycidyl ether, butenediol diglycidyl ether, butynediol diglycidyl ether), bifunctional glycidyl group-containing hydantoin compounds (e.g., 1,3-diglycidyl-5,5-dialkylhydantoin, 1-glycidyl-3-(glycidoxyalkyl)-5,5-dialkylhydantoin), bifunctional glycidyl group-containing siloxanes (e.g., 1,3-bis(3-glycidoxypropyl)-1,1,3,3-tetramethyldisiloxane, α,β-bis(3-glycidoxypropyl)polydimethylsiloxane), and modified products thereof. Among these, a bisphenol A type epoxy resin, a bisphenol F type epoxy resin, and a biphenyl type epoxy resin are preferred from the standpoint of the reactivity and the workability.

Examples of the bifunctional compound having a phenolic hydroxy group of the component (b) include mononuclear aromatic dihydroxy compounds having one benzene ring, such as catechol, resorcin, and hydroquinone; bisphenols, such as bis(4-hydroxyphenyl)propane (bisphenol A), bis(4-hydroxyphenyl)methane (bisphenol F), and bis(4-hydroxyphenyl)ethane (bisphenol AD); compounds having a condensed ring, such as dihydroxynaphthalene; bifunctional phenol compounds into which an allyl group is introduced, such as diallyl resorcin, diallyl bisphenol A, and triallyl dihydroxybiphenyl; and dibutyl bisphenol A.

Specific examples of the carboxy group-containing compound of the component (b) include adipic acid, succinic acid, malonic acid, cyclohexanedicarboxylic acid, phthalic acid, isophthalic acid, and terephthalic acid.

Examples of the mercapto group-containing bifunctional compound of the component (b) include ethylene glycol bisthioglycolate and ethylene glycol bisthiopropionate.

Specific examples of the isocyanate group-containing bifunctional compound of the component (b) include diphenylmethane diisocyanate (MDI), isophorone diisocyanate (IPDI), hexamethylene diisocyanate (HMDI), and tolylene diisocyanate (TDI).

Specific examples of the cyanate ester group-containing bifunctional compound of the component (b) include 2,2-bis(4-cyanatophenyl)propane, 1,1-bis(4-cyanatophenyl)ethane, and bis(4-cyanatophenyl)methane.

Among the bifunctional compounds (b), a bifunctional compound having a phenolic hydroxy group is preferred from the standpoint of obtaining a thermoplastic polymer, a bifunctional compound having two phenolic hydroxy groups and having a bisphenol structure or a biphenyl structure is preferred from the standpoint of the heat resistance and the joining property, and bisphenol A, bisphenol F, and bisphenol S are preferred from the standpoint of the heat resistance and the cost.

In a case where the component (a) is a bisphenol A type epoxy resin, a bisphenol F type epoxy resin, a bisphenol S type epoxy resin, or a biphenyl type epoxy resin, and the component (b) is bisphenol A, bisphenol F, or bisphenol S, a polymer obtained by polymerization of the component (a) and the component (b) has a main skeleton of a para-phenylene structure and an ether bond, and has a structure having a main chain formed by linking the para-phenylene structure and the ether bond by an alkylene group, and a hydroxy group generated by polyaddition which is arranged in a side chain.

The linear structure having a para-phenylene skeleton can increase the mechanical strength of the polymer after polymerization, and the hydroxy group arranged in the side chain can improve the adhesiveness to the base material. As a result, a high joining strength can be realized while maintaining the workability of the thermosetting resin. Further, in the case of a thermoplastic resin, recycling and repairing become possible by softening and melting the resin with heat, and recyclability and repairability, which are problems in a thermosetting resin, can be improved.

### <<Phenoxy Resin>>

The phenoxy resin is a polyhydroxy polyether synthesized from bisphenols and epichlorohydrin, and has thermoplasticity. For the production of the phenoxy resin, a method by a direct reaction of dihydric phenols and epichlorohydrin, and a method by an addition polymerization reaction of a diglycidyl ether of dihydric phenols and dihydric phenols are known, and the phenoxy resin used in the present embodiment may be obtained by any production method. In the case of a direct reaction between dihydric phenols and epichlorohydrin, examples of the dihydric phenols include phenols such as bisphenol A, bisphenol F, bisphenol S, biphenol, biphenylene diol, and fluorene diphenyl; and an aliphatic glycol, such as ethylene glycol, propylene glycol, and diethylene glycol. Among these, bisphenol A, bisphenol F, and bisphenol S are preferred from the standpoint of the cost, the joining property, the viscosity, and the heat resistance. One kind thereof may be used alone, or two or more kinds thereof may be used in combination.

The phenoxy resin has a chemical structure similar to that of the epoxy resin, and has a main skeleton of a para-phenylene structure and an ether bond, and has a structure having a main chain formed by linking the para-phenylene structure and the ether bond and a hydroxy group arranged in a side chain.

### <<Physical Properties of Thermoplastic Epoxy Resin and Phenoxy Resin>>

The weight-average molecular weight of the thermoplastic epoxy resin and the phenoxy resin, which is a value in terms of polystyrene by gel permeation chromatography (GPC) measurement, is preferably 10,000 to 500,000, more preferably 18,000 to 300,000, and further preferably 20,000 to 200,000. Each weight-average molecular weight is calculated from an elution peak position detected by GPC, and is a value of a molecular weight in terms of standard polystyrene. In the case where the weight-average molecular weight is within this value range, the balance between thermoplasticity and heat resistance is good, a joined object is efficiently obtained by melting, and the heat resistance thereof is also high. In the case where the weight-average molecular weight is 10,000 or more, the heat resistance is excellent, and in the case where the weight-average molecular weight is 500,000 or less, the viscosity at the time of melting is low, and the joining property is high.

### <<Components other than Resin Component in Thermoplastic Film B>>

If necessary, the thermoplastic film B may contain a filler or an additive as a component other than the resin component as long as the object of the present embodiment is not impaired.

Examples of the filler include an inorganic filler and an organic filler (such as resin powder).

Examples of the inorganic filler include spherical fused silica, metal powder of a metal, such as iron, silica sand, talc, calcium carbonate, mica, acid clay, diatomaceous earth, kaolin, quartz, titanium oxide, silica, and glass balloons.

Examples of the organic filler include rubber fine particles, elastomer fine particles, core-shell particles, fine particles of a thermoplastic resin, fine particles of a thermosetting resin, and phenol resin microballoons.

In the case where the thermoplastic film B contains a filler, the content of the filler in 100% by volume of the total amount of the thermoplastic film B is preferably 50% by volume or less, more preferably 30% by volume or less, further preferably 20% by volume or less, and most preferably 10% by volume or less. The volume of the filler can be determined by dividing the weight of the filler contained in the thermoplastic film B by the apparent specific gravity of the filler.

The content of the resin component in 100% by volume of the total amount of the thermoplastic film B is preferably 10% by volume or more, more preferably 20% by volume or more, further preferably 30% by volume or more, still further preferably 50% by volume or more, and in one embodiment, 80% by volume or more, in another embodiment, 90% by volume or more, and in still another embodiment, 99% by volume or more.

Examples of the additive include an antifoaming agent, a coupling agent, such as a silane coupling agent, a pigment, and a tackifier resin, and one kind or two or more kinds thereof may be contained.

The content of the additive in the thermoplastic film B is preferably 10% by mass or less, more preferably 5% by mass or less, and further preferably 1% by mass or less.

The content of the resin component in the thermoplastic film B is preferably 10% by mass or more, more preferably 20% by mass or more, further preferably 30% by mass or more, still further preferably 50% by mass or more, and in one embodiment, 80% by mass or more, in another embodiment, 90% by mass or more, and in still another embodiment, 99% by mass or more.

In one embodiment of the present invention, it is preferred that the amorphous thermoplastic resin is at least one kind selected form the group consisting of a thermoplastic epoxy resin and a phenoxy resin, in which the thermoplastic epoxy resin is a polymer of (a) a bifunctional epoxy resin monomer or oligomer and (b) a bifunctional compound having the same or different two functional groups selected from the group consisting of a phenolic hydroxy group, a carboxy group, a mercapto group, an isocyanate group, and a cyanate ester group (provided that a polyhydroxy polyether synthesized from a bisphenol compound and epichlorohydrin is excluded), and the phenoxy resin is a polyhydroxy polyether synthesized from a bisphenol compound and epichlorohydrin.

### <<Shape of Thermoplastic Film B>>

The thermoplastic film B is an article in the form of sheet.

The thickness of the thermoplastic film B is preferably 10 µm or more and 3 mm or less.

From the standpoint of providing the joined object firmly joined within a short joining process time, the thickness of the thermoplastic film B is more preferably 1 mm or less, further preferably 0.5 mm or less, still further preferably 0.3 mm or less, particularly preferably 0.2 mm or less, and most preferably 0.1 mm or less. From the standpoint of further enhancing the adhesiveness and the peel resistance, the thickness of the thermoplastic film B is more preferably 20 µm or more, further preferably 30 µm or more, and still further preferably 40 µm or more.

In the case where the thickness of the thermoplastic film B is within the above numerical range, the thermoplastic film B can be efficiently spread on the joining surface to the columnar base material A by heating or the like, and high adhesiveness can be obtained.

The thermoplastic film B may be a single layer or may be a laminated body composed of a plurality of layers, and the thermoplastic film B is preferably a single layer from the standpoint of the ease of production and from the standpoint of improving the adhesiveness.

In addition, the thermoplastic film B may have tackiness as long as the effects of the present invention are not impaired. The tackiness may be imparted by mixing a tackifier resin with the thermoplastic resin constituting the thermoplastic film B, or by applying a pressure-sensitive adhesive to the surface of the thermoplastic film B. The tackiness may be imparted to one surface or both surfaces, and it is more preferred to impart the tackiness to one surface because the tackiness can be imparted only to the surface in contact with the columnar base material A and the adhesive surface is less likely to be exposed to the outside. The coating area of the pressure-sensitive adhesive may be the entire surface or a part thereof, such as a stripe shape, a dot shape, a lattice shape, or a tile shape (a shape in which a plurality of squares are arranged with a gap). In the case where the coating area is small, the pressure-sensitive adhesive is less likely to protrude outward from the end face of the thermoplastic film B and is less likely to be exposed, and thus the adhesiveness is less likely to decrease, which is preferred. In addition, the tackiness may be imparted only slightly enough to prevent slipping. That is, when the thermoplastic film B is brought into contact with the columnar base material A, the thermoplastic film B may not stick to the columnar base material A, and the tackiness may be an extent in which the resistance is increased (the thermoplastic film B may be less likely to slip) when a force in the shearing direction is applied. It is preferred that the tackiness is low because the adhesion force is likely to be large, and the peel resistance and the adhesiveness is excellent.

### <<Method for Producing Thermoplastic Film B>>

The method for producing the thermoplastic film B is not particularly limited, and for example, the thermoplastic film B may be obtained by heating and polymerizing a monomer or an oligomer of a bifunctional epoxy compound to obtain a resin composition, adding a solvent to the obtained resin composition as necessary, applying the resin composition to a release film, curing and drying the resin composition, and pressurizing the resin composition as necessary. In addition, the polymerization reaction may be performed after applying to the release film, or may be performed after removing the solvent to obtain a film shape, or may be a combination thereof.

### [Resin C]

While not particularly limited, the resin C preferably can be insert-molded, and is more preferably formed of one kind selected from the group consisting of a thermoplastic resin, a thermosetting resin, and fiber reinforced plastics (FRP). The thermoplastic resin means a resin that forms a molded article through the phase transition including melting and solidification in molding, and the thermosetting resin means a resin that form a molded article through polymerization reaction in molding. Among these, from the standpoint of the peel resistance, the adhesiveness, the ease of molding, and the like, the resin C is preferably one kind selected from the group consisting of a thermoplastic resin and a thermosetting resin. The thermoplastic resin is preferably a resin that can be injection-molded within a heating temperature range of 200 to 400°C, and the thermosetting resin is preferably a resin that can be molded through any of injection molding, transfer molding, and compression molding, within a heating temperature range of 40 to 200°C.

The resin C is preferably different from the resin components constituting the thermoplastic film B.

In the present embodiment. the resin C may be used as a sealing member.

In the case of using as a sealing member, the resin C is preferably a resin that can be insert-molded.

Examples of the thermoplastic resin include a polyolefin and an acid-modified product thereof, polystyrene, polymethyl methacrylate, an AS resin, an ABS resin, a thermoplastic aromatic polyester, such as polyethylene terephthalate and polybutylene terephthalate, polycarbonate, polyimide, polyamide, polyamideimide, polyetherimide, polyethersulfone, polyphenylene ether and a modified product thereof, polyphenylene sulfide, polyoxymethylene, polyarylate, polyether ketone, polyether ether ketone, polyether ketone ketone, a thermoplastic epoxy, and fiber-reinforced materials thereof. From the standpoint of the heat resistance, the cost, the ease of molding, and the like, it is preferred to contain at least one kind selected from polycarbonate, glass fiber-reinforced polyamide, glass fiber-reinforced polybutylene terephthalate, and glass fiber-reinforced polyphenylene sulfide.

Examples of the thermosetting resin include an epoxy resin, a vinyl ester resin, a phenol resin, a silicone resin, a urethane resin, a polyimide resin, a urea resin, a melamine resin, and an unsaturated polyester resin. The thermosetting resins each may be used alone, or two or more kinds thereof may be used in combination.

The thermosetting resin preferably contains an epoxy resin. Examples of the epoxy resin include a bifunctional epoxy resin and a trifunctional or higher polyfunctional epoxy resin. Examples of the bifunctional epoxy resin include a bisphenol A type epoxy resin, a bisphenol F type epoxy resin, a modified bisphenol A type epoxy resin, a modified bisphenol F type epoxy resin, and a biphenyl type epoxy resin. Examples of the trifunctional or higher polyfunctional epoxy resin include a phenol-novolac type epoxy resin, a cresol-novolac type epoxy resin, a trishydroxyphenylmethane type epoxy resin, a tetraphenylolethane type epoxy resin, and a dicyclopentadiene type epoxy resin. The epoxy resins each may be used alone, or two or more kinds thereof may be used in combination. The epoxy resin used is preferably a bifunctional epoxy resin, and more preferably one or more kind selected from the group consisting of a bisphenol F type and bisphenol A type epoxy resins.

In the case where an epoxy resin is used, the thermoplastic resin preferably contains a phenol resin as a curing agent for the epoxy resin. The phenol resin used is preferably a novolac type phenol resin. Examples of the novolac type phenol resin include a phenol-novolac resin, a phenol-aralkyl resin, a trishydroxyphenylmethane-novolac resin, a cresol-novolac resin, a tert-butylphenol-novolac resin, and a nonylphenol-novolac resin. The phenol resins each may be used alone, or two or more kinds thereof may be used in combination.

The molding temperature (resin temperature) of the resin C is preferably 100 to 400°C, more preferably 150 to 350°C, and further preferably 180 to 300°C. By molding within a range of 100 to 400°C, the thermoplastic film B is efficiently deformed and melted by heating, and can be effectively spread through wetting on the joining surface, resulting in the high adhesiveness.

The combination of the materials of the columnar base material A and the resin C is not particularly limited.

### [Step 1]

In the step 1, the thermoplastic film B is wound around at least a part of the outer periphery of the columnar base material A in the peripheral direction.

The term "at least a part of the outer periphery" herein means at least a part in the longitudinal direction of the columnar base material A. The term "wound" herein means that the thermoplastic film B is wound around the columnar base material A in the peripheral direction once or more times.

One example of an embodiment of the step 1 will be described with reference to Fig. 1.

Fig. 1 is a schematic illustration showing one example of the joined object.

As shown in 1-1 in Fig. 1, it suffices that the thermoplastic film B (B) is wound around at least a part of the outer periphery of the columnar base material A (A). At this time, as shown in Fig. 1-1, the columnar base material A (A) may have on a part thereof a non-attached portion (a) of the thermoplastic film B (B), may not have the non-attached portion (a), and may have the non-attached portion (a) only at one end of the columnar base material A (A). Accordingly, it suffices that at least a part of the outer periphery of the columnar base material A (A) is joined to the resin C (C) via the thermoplastic film B (B), and the columnar base material A (A) may have a portion that is joined to the resin C (C) without the thermoplastic film B (B) to join to the resin C (C).

From the standpoint of facilitating the effects of the present invention, the columnar base material A (A) preferably has the non-attached portion (a) on both ends thereof.

In the step 1, as shown in 1-1 of Fig. 1, the thermoplastic film B (B) is wound around the outer periphery of the columnar base material A (A) in the peripheral direction. At this time, as shown in 1-1 of Fig. 1, it suffices that the thermoplastic film B (B) is wound in such a manner that the thermoplastic film B (B) continuously covers the outer periphery of the columnar base material A (A). The thermoplastic film B (B) is wound in the peripheral direction of the columnar base material A (A) once or more times, and thereby no gap occurs on both end edges of the wound thermoplastic film B (B) to achieve high sealing property, which can exhibit excellent leakage resistance.

The thermoplastic film B may have tackiness. From the standpoint of the handleability, it is preferred that the thermoplastic film B has tackiness, and is temporarily fixed to the columnar base material A.

The thermoplastic film B may be applied with a pressure-sensitive adhesive in such a range that does not impair the leakage resistance, and then temporarily fixed to the columnar base material A by winding therearound. The pressure-sensitive adhesive used may be a commercially available product.

After winding the thermoplastic film B around the outer periphery of the columnar base material A as described above, it is possible to perform an operation of melting and solidifying the wound thermoplastic film B, so as to join the columnar base material A and the thermoplastic film B.

Specifically, as shown in 1-1 of Fig. 1, after winding the thermoplastic film B (B) around the columnar base material A (A), the thermoplastic film B (B) may be melted and solidified. The thermoplastic film B (B) is thermoplastic, and therefore can be adhered without gap to the columnar base material A (A) and can be joined thereto.

In the present embodiment, the thermoplastic film B can be melted and solidified by joining the resin C in the subsequent step 2, and therefore, for simplifying the process steps, it is possible that the thermoplastic film B is not melted and solidified after the step 1, but is melted and solidified by heating in the molding step of the resin C in the step 2. On the other hand, the columnar base material A and the thermoplastic film B can be joined and integrated more securely by melting and solidifying the thermoplastic film B in advance, and therefore from the standpoint of enhancing the sealing property and the leakage resistance, it is preferred to perform, after the step 1, an operation of melting and solidifying the wound thermoplastic film B, so as to join the columnar base material A and the thermoplastic film B.

### <<Melting and Solidification>>

In joining the columnar base material A and the thermoplastic film B, examples of the method for melting the thermoplastic film B include at least one kind selected from the group consisting of contact heating, hot air heating, heat press, hot plate welding, infrared ray heating, ultrasonic welding, vibration welding, and high frequency induction welding.

Among these, from the standpoint of the ease of production and the shortening of the joining process, heat press and high frequency induction welding are preferred.

In the case where the thermoplastic film B is melted by heating, the temperature of the joining part of the columnar base material A and the thermoplastic film B may be determine in consideration of the heat resisting temperature of the material of the columnar base material A, and is preferably 100 to 300°C, more preferably 120 to 250°C, and further preferably 150 to 220°C. By joining at 100 to 300°C, the thermoplastic film B is efficiently deformed and melted, and can be effectively spread through wetting, resulting in the high adhesiveness.

Examples of the method for solidifying the molten thermoplastic film B include a method of allowing to cool at ordinary temperature and a method of allowing to cool with a cooling device. The "ordinary temperature" means an ordinary room temperature within a range of 5 to 30°C. In particular, a method of allowing to cool at ordinary temperature is preferred from the standpoint of the ease of production.

In the description herein, the term "solidification" means a solid state at ordinary temperature, i.e., the absence of fluidity in a state at 23°C without pressurization.

### [Step 2]

In the step 2, the resin C is joined to the part of the columnar base material A having the thermoplastic film B wound. The method for joining the resin C is preferably a method of joining through insert molding from the standpoint of the process time and of providing the joined object that is difficult to peel off from each other even after undergoing a thermal cycle, and is excellent in adhesiveness. The thermoplastic film B can be melted and solidified by insert-molding the resin C, and therefore it is possible that the thermoplastic film B is not melted and solidified before the step 2, but is melted and solidified by heating in the molding process of the resin C in the step 2.

### <Joined Object>

The joined object obtained by the method for producing a joined object of the present embodiment includes the columnar base material A and the resin C that are joined and integrated via an adhesive layer formed by melting and then solidifying the thermoplastic film B.

The joined object obtained by the method for producing a joined object of the present embodiment exhibits excellent adhesiveness even in a joined object of dissimilar materials. Since the adhesiveness is affected by many factors, such as the thickness of the thermoplastic film B, the molecular weight and chemical structure of the polymer constituting the thermoplastic film B, mechanical properties, and viscoelastic properties, in addition to the strength of the interfacial interaction acting between the thermoplastic film B and the columnar base material A and between the thermoplastic film B and the resin C, the details of the mechanism by which the joined object exhibits excellent adhesiveness are not clear. The details of the relationship to the peak value of tanδ are also not clear.

In a more preferred embodiment of the joined object, the thermoplastic film B contains, as a main component, an amorphous thermoplastic resin which is at least one of a thermoplastic epoxy resin and a phenoxy resin. The details of the mechanism by which the more preferred embodiment exhibits more excellent adhesiveness are not clear, but it is presumed that the main factors are that the cohesive force in the amorphous thermoplastic resin is low, and when a hydroxy group is present in the resin, a chemical bond or an intermolecular force, such as a hydrogen bond or a van der Waals force, is formed at the interface between the thermoplastic film B and the columnar base material A and the interface between the thermoplastic film B and the resin C.

However, in the joined object, the states or characteristics of the interface between the thermoplastic film B and the columnar base material A and the interface between the thermoplastic film B and the resin C are very thin chemical structures at a nanometer level or less, and are difficult to analyze. Therefore, it is impossible or impractical in the current technology to express the states or characteristics of the interfaces so as to distinguish them from those not depending on the use of the thermoplastic film B by specifying the states or characteristics of the interfaces.

The joined object obtained by the method for producing a joined object of the present embodiment is difficult to peel off between the columnar base material A and the resin C even after undergoing a thermal cycle, and is excellent in adhesiveness, and therefore the joined object can be favorably applied to the applications in which the characteristics can be exerted. For example, an electric/electronic component including the joined object obtained by the method for producing a joined object of the present embodiment can be provided.

The joined object obtained by the method for producing a joined object of the present embodiment can provide an electric/electronic component. More specifically, a terminal block, a bus bar, an electric element, and the like of an automobile and an electric/electronic component can be provided.

### Examples

Hereinafter, the present embodiment will be specifically described with reference to Examples and Comparative Examples, but the present embodiment is not limited thereto.

In Examples and Comparative Examples, a joined object was produced by joining a columnar base material A, a thermoplastic film B or a joining agent, and a resin C in this order. Hereinafter, the layer formed of the thermoplastic film B or the joining agent is referred to as an intermediate layer.

The following materials were used in Examples and Comparative Examples.

### <Columnar Base Material A>

Columnar base material (rectangular column): C1100 (tough pitch copper) having a width of 12.4 mm, a length of 64.9 mm, and a thickness of 1.6 mm

### <Thermoplastic Film B>

Films P-1 to P-5 produced in Examples 1-1 to 1-3 and 2 to 5

### <Joining Agent>

Joining agents Q-1 to Q-6 produced in Comparative Examples 1 to 6

### <Resin C>

### <<PPS (Polyphenylene Sulfide)>>

FZ-1130-D5, available from DIC Corporation (glass fibers: 30% by mass) (melting point: 280°C)

### <<PC (Polycarbonate)>>

121R, available from SABIC (softening point: 129°C, melting point: 220°C)

### <<PA6T>>

Ultramid T1000HG7, available from BASF (glass fibers: 35% by mass) (melting point: 320°C)

### <Melting Point, Glass Transition Temperature, and Epoxy Equivalent of Thermoplastic Film B and Joining Agent>

### (Melting Point and Glass Transition Temperature)

Two to Ten mg of each of the thermoplastic films B and the joining agents was weighed and placed in an aluminum pan, and was heated from 23°C to 200°C at 10°C/min with DSC (DSC8231, available from Rigaku Corporation) to provide a DSC curve. The heat of fusion was calculated from the area of the endothermic peak in melting on the DSC curve and the weighed value. The endothermic peak temperature of the resulting DSC curve (i.e., the temperature of the endothermic peak of the DSC curve occurring in melting) was designated as the melting point (X°C). In the case where no endothermic curve was obtained, or the case where the heat of fusion was 15 J/g or less, a temperature obtained by adding 70°C to the glass transition temperature was designated as the melting point (X°C). For the glass transition temperature, the specimen was heated to 200°C (10°C/min), then cooled to 40°C or less (10°C/min), and further heated to 200°C, with DSC, and in the second cycle thereof, the temperature at which the DSC curve started to drop was designated thereto. The thermosetting resin not being melted by heating was designated as having no melting point. The measurement results are shown in Tables 1 and 2.

### (Epoxy Equivalent)

The epoxy equivalent was measured according to JIS K7236:2001, and converted to the value in terms of resin solid content. For the simple mixture associated with no reaction, the epoxy equivalent was calculated from the epoxy equivalents and the contents of the components. The calculation results are shown in Tables 1 and 2.

### <Measurement of Temperature-tanδ Curve>

Each of the thermoplastic films B was cut into a size of 5 mm in width and 20 mm in length with a cutter to prepare a test piece for measuring tanδ. The test piece was measured with dynamic viscoelasticity analyzer (DMA) (Rheogel-E4000, available from UBM Co., Ltd.) under the following condition.

While heating from 0°C to 200°C at a rate of 4°C/min with a measurement frequency fixed to 10 Hz, the storage shear elastic modulus (E") and the loss shear elastic modulus (E') were measured for each temperature to provide the temperature-tanδ curve, and the value of the peak appearing first (i.e., appearing on the lowest side) within the measurement range was designated as the peak value of tanδ. The tanδ (loss tangent) was the ratio of the storage shear elastic modulus (E") and the loss shear elastic modulus (E'), i.e., the value of E"/E'.
Size of test piece: thickness: 0.01 to 1 mm, width: 5 mm, length: 20 mm
Strain amount: 0.1 mm
Applied waveform: sine wave
Frequency: 10 Hz
Measurement temperature: 0 to 200°C (or until melting)
Temperature rise rate: 4°C/min

The case where the peak value of tanδ was 1 or more was evaluated as "A", and the case where that was less than 1 was evaluated as "B". The evaluation results are shown in Tables 1 and 2.

### <Evaluation of Surface Tackiness of Thermoplastic Film B and Joining Agent>

Each of the thermoplastic films B and the joining agents was pressed onto a vertical glass plate with a force of 10 N in an ordinary temperature atmosphere, and the case where the film or agent did not drop off from the glass plate after releasing the pressure was determined to have tackiness.

### <Shear adhesion force>

On a surface of a copper base material (C1100, 25 mm × 100 mm × 1.6 mm in thickness) having been degreased by wiping with a cloth impregnated with methyl ethyl ketone, each of the films P-1 to P-5 (15 mm × 25 mm) used in Examples or the joining agents Q-1 to Q-5 used in Comparative Examples was placed, on which another copper base material having a surface similarly treated was placed to hold the film or agent, and the laminate was fixed with clips. The overlap of the base materials was 25 mm in width and 12.5 mm in depth. The laminate was heated to 200°C for 30 minutes, and then allowed to cool to room temperature. The test piece was measured for the shear adhesion force according to JIS K6850:1999. The atmospheric temperature in the measurement was 80°C. In more detail, the shear adhesion force was measured in such a manner that the joined object was allowed to stand at 80°C for 30 minutes or more, and then subjected to a tensile shear joining strength test in a 80°C atmosphere according to ISO 19095:2015 with a tensile tester (Universal Testing Machine Autograph "AG-X plu"s, available from Shimadzu Corporation, load cell: 10 kN, tensile rate: 10 mm/min).

### [Example 1-1]

### (Film P-1)

A reactor equipped with a stirrer, a reflux condenser, a gas introduction tube, and a thermometer was charged with 20 g of Phenotohto (registered trademark) YP-50S (available from Nippon Steel Chemical & Material Co., Ltd., phenoxy resin, weight average molecular weight: ca. 50,000) and 80 g of cyclohexanone, and the temperature was raised to 60°C while stirring. Dissolution was visually confirmed, and the mixture was cooled to 40°C to obtain a phenoxy resin composition having a solid content of 20% by mass. The phenoxy resin composition was coated on a PET film having been subjected to a release treatment, and the solvent was dried by heating to 140°C for 30 minutes to provide a film P-1 having a solid content of 100% by mass and a thickness of 40 µm.

### (Step 1)

The film P-1 was wound once around the columnar base material A to make an overlap part of 2 to 3 mm. As shown in 1-1 of Fig. 1, the film P-1 (B) was wound around the columnar base material A (A) to provide a non-attached portion (a) of the film P-1 (B).

Subsequently, the columnar base material A (A) having the film P-1 (B) wound therearound was heated to 200°C for 15 minutes to melt the film P-1 (B). Thereafter, the film P-1 (B) was solidified by allowing to cool at ordinary temperature for 1 minute, so as to provide a columnar base material with a film including the columnar base material A (A) and the film P-1 (B) joined to each other.

### (Step 2)

PPS as the resin C was joined to the portion of the base material with the film having the film P-1 (B) wound therearound through insert molding by using an injection molding machine (model name: "Si-100-6s", available from Toyo Machinery & Metal Co., Ltd.) and a molding die, so as to provide a joined object of the columnar base material A and the resin C. The conditions of the insert molding were an injection molding temperature (resin temperature) of 300°C, a die temperature of 135°C, an injection rate of 15 mm/sec, an injection pressure of 130 MPa, a holding pressure of 70 MPa, a pressure holding time of 4 seconds, and a cooling time of 30 seconds. A schematic illustration of the joined object of the columnar base material A (A) and the resin C (C) obtained in the step 2 is shown in 1-2 of Fig. 1.

### [Example 1-2]

A joined object was obtained in the same manner as in Example 1-1 except that in the step 2, PC was used as the resin C, and the conditions of the insert molding were an injection molding temperature (resin temperature) of 265°C, a die temperature of 90°C, an injection rate of 8 mm/sec, an injection pressure of 100 MPa, a holding pressure of 50 MPa, a pressure holding time of 8 seconds, and a cooling time of 30 seconds.

### [Example 1-3]

A joined object was obtained in the same manner as in Example 1-1 except that in the step 2, PA6T was used as the resin C, and the conditions of the insert molding were an injection molding temperature (resin temperature) of 340°C, a die temperature of 155°C, an injection rate of 15 mm/sec, an injection pressure of 130 MPa, a holding pressure of 70 MPa, a pressure holding time of 4 seconds, and a cooling time of 30 seconds.

### [Example 2]

### (Film P-2)

A reactor equipped with a stirrer, a reflux condenser, a gas introduction tube, and a thermometer was charged with 1.0 equivalent (203 g) of jER (registered trademark) 1007 (available from Mitsubishi Chemical Corporation, bisphenol A type epoxy resin, weight average molecular weight: ca. 10,000), 1.0 equivalent (12.5 g) of bisphenol S, 2.4 g of triphenylphosphine, and 1,000 g of methyl ethyl ketone, and the temperature was raised to 100°C while stirring in a nitrogen gas atmosphere. Dissolution was visually confirmed, and the mixture was cooled to 40°C to obtain a thermoplastic epoxy resin composition having a solid content of 20% by mass. To the resin composition, KMP-605 (available from Shin-Etsu Silicone Co., Ltd., silicone powder) was added in an amount of 10% by mass (24 g) with respect to the solid content, and dispersed therein by stirring, and then the solvent was removed therefrom to provide a thermoplastic epoxy resin composition as a solid content. A non-sticking fluorine resin film (Nitoflon (registered trademark), No. 900UL, available from Nitto Denko Corporation) was placed on each of the upper plate and the lower plate of a pressing machine, the thermoplastic epoxy resin composition was disposed on the non-sticking fluorine resin film on the lower plate, and then the thermoplastic epoxy resin composition was heated and pressed for 2 hours with the pressing machine heated to 160°C, so as to provide a film P-2 having a solid content of 100% by mass and a thickness of 40 µm.

### (Step 1 and Step 2)

A joined object was obtained in the same manner as in the step 1 and the step 2 in Example 1-1 except that the film P-2 was used instead of the film P-1.

### [Example 3]

### (Film P-3)

A reactor equipped with a stirrer, a reflux condenser, a gas introduction tube, and a thermometer was charged with 18 g of Phenotohto (registered trademark) YP-50S (available from Nippon Steel Chemical & Material Co., Ltd., phenoxy resin, weight average molecular weight: ca. 50,000), 2 g of YS Polyster K125 (available from Yasuhara Chemical Co., Ltd., terpene-phenol resin, softening point: 125°C), and 80 g of cyclohexanone, and the temperature was raised to 60°C while stirring. Dissolution was visually confirmed, and the mixture was cooled to 40°C to obtain a phenoxy resin composition having a solid content of 20% by mass. The phenoxy resin composition was coated on a PET film having been subjected to a release treatment, and the solvent was dried by heating to 140°C for 30 minutes to provide a film P-3 having a thickness of 40 µm.

### (Step 1)

The film P-3 was wound once around the columnar base material A to make an overlap part of 2 to 3 mm. As shown in 1-1 of Fig. 1, the film P-3 was wound around the columnar base material A (A) to provide a non-attached portion (a) of the film P-3, and the film P-3 (B) was melted by heating to 200°C for 15 minutes. Thereafter, the film P-3 (B) was solidified by allowing to cool at ordinary temperature for 1 minute, so as to provide a columnar base material with a film including the columnar base material A and the film P-3 joined to each other.

### (Step 2)

A joined object was obtained in the same manner as in the step 2 in Example 1-1 except that the film P-3 was used instead of the film P-1.

### [Example 4]

A joined object was obtained in the same manner as in Example 1-1 except that a film P-4 having a thickness of 150 µm was obtained, and the film P-4 was used instead of the film P-1.

### [Example 5]

### (Film P-5)

A reactor equipped with a stirrer, a reflux condenser, a gas introduction tube, and a thermometer was charged with 12 g of Phenotohto (registered trademark) YP-50S (available from Nippon Steel Chemical & Material Co., Ltd., phenoxy resin, weight average molecular weight: ca. 50,000), 8 g of Carbodilite (available from Nisshinbo Chemical Inc., polycarbodiimide resin), and 80 g of cyclohexanone, and the temperature was raised to 60°C while stirring. Dissolution was visually confirmed, and the mixture was cooled to 40°C to obtain a resin composition having a solid content of 20% by mass. The resin composition was coated on a PET film having been subjected to a release treatment, and the solvent was dried by heating to 140°C for 30 minutes to provide a film P-5 having a thickness of 40 µm.

### (Step 1 and Step 2)

A joined object was obtained in the same manner as in the step 1 and the step 2 in Example 1-1 except that the film P-5 was used instead of the film P-1.

### [Example 6]

### (Film P-6)

A crystalline polyamide-based hot-melt adhesive film (Elphan (registered trademark) NT-120, available from Nihon Matai Co., Ltd.) was used to prepare a film P-6 having a thickness shown in Table 1.

The film P-6 was insoluble in a solvent, and was not able to measure the weight average molecular weight and the epoxy equivalent.

### (Step 1 and Step 2)

A joined object was obtained in the same manner as in the step 1 and the step 2 in Example 1-1 except that the film P-6 was used instead of the film P-1.

### [Example 7]

### (Film P-7)

A reactor equipped with a stirrer, a reflux condenser, a gas introduction tube, and a thermometer was charged with 19 g of Phenotohto (registered trademark) YP-50S (available from Nippon Steel Chemical & Material Co., Ltd., phenoxy resin, weight average molecular weight: ca. 50,000), 1 g of Tamanol 803L (available from Arakawa Chemical Industries, Ltd., a terpene-phenol resin, softening point: 145 to 160°C), and 80 g of cyclohexanone, and the temperature was raised to 60°C while stirring. Dissolution was visually confirmed, and the mixture was cooled to 40°C to obtain a phenoxy resin composition having a solid content of 20% by mass. The phenoxy resin composition was coated on a PET film having been subjected to a release treatment, and the solvent was dried by heating to 140°C for 30 minutes to provide a film P-3 having a thickness of 40 µm.

### (Step 1 and Step 2)

A joined object was obtained in the same manner as in the step 1 and the step 2 in Example 1-1 except that the film P-7 was used instead of the film P-1.

### [Comparative Example 1]

A joined object was obtained in the same manner as in Example 1-1 except that a film Q-1, which was a polycarbonate film (available from Mitsubishi Gas Chemical Co., Inc., Iupilon FE-2000), was used instead of the film P-1.

### [Comparative Example 2]

### (Film Q-2)

A film Q-2 was obtained in the same manner as in Example 3 except that in (Film P-3), JP-100 (available from Nippon Soda Co., Ltd., epoxidized polybutadiene) was used instead of YS Polyster K125 (available from Yasuhara Chemical Co., Ltd., terpene-phenol resin).

### (Step 1 and Step 2)

A joined object was obtained in the same manner as in the step 1 and the step 2 in Example 3 except that the film Q-2 was used instead of the film P-3.

### [Comparative Example 3]

### (Film Q-3)

A film Q-3 was obtained in the same manner except that YS Polyster T100 (available from Yasuhara Chemical Co., Ltd., terpene-phenol resin, softening point: 100°C) was used instead of YS Polyster K125 (available from Yasuhara Chemical Co., Ltd., terpene-phenol resin, softening point: 125°C).

### (Step 1 and Step 2)

A joined object was obtained in the same manner as in the step 1 and the step 2 in Example 3 except that the film Q-3 was used instead of the film P-3.

### [Comparative Example 4]

A reactor equipped with a stirrer, a reflux condenser, a gas introduction tube, and a thermometer was charged with 1.0 equivalent (285 g) of jER (registered trademark) 1001 (available from Mitsubishi Chemical Corporation, bisphenol A type epoxy resin, weight average molecular weight: ca. 900), 1.0 equivalent (63 g) of Shonol (registered trademark) BRG-556 (available from Aica Kogyo Co., Ltd., novolac type phenol resin), 1.4 g of triphenylphosphine, and 650 g of methyl ethyl ketone, and the temperature was raised to 100°C while stirring in a nitrogen gas atmosphere. Dissolution was visually confirmed, and the mixture was cooled to 40°C to obtain a solution of a thermosetting epoxy resin having a solid content of 20% by mass. The solvent was removed therefrom to provide a thermoplastic epoxy resin composition as a solid content. A non-sticking fluorine resin film (Nitoflon (registered trademark) No. 900UL, available from Nitto Denko Corporation) was placed on each of the upper plate and the lower plate of a pressing machine, the thermoplastic epoxy resin composition was disposed on the non-sticking fluorine resin film on the lower plate, and then the thermoplastic epoxy resin composition was heated and pressed for 2 hours with the pressing machine heated to 160°C, so as to provide a film Q-4 having a thickness of 40 µm.

### (Step 1 and Step 2)

A joined object was obtained in the same manner as in the step 1 and the step 2 in Example 1-1 except that the film Q-4 was used instead of the film P-3.

### [Comparative Example 5]

### (Film Q-5)

A thermosetting liquid epoxy adhesive, Betamate 1496S (available from Du Pont Inc., an epoxy resin base) was coated on a release film, cured at 100°C for 1 hour, then cooled, and released from the release film, so as to provide a film Q-5 having a thickness of 100 µm.

### (Step 1 and Step 2)

A joined object was obtained in the same manner as in the step 1 and the step 2 in Example 1-1 except that the film Q-5 was used instead of the film P-3.

### [Comparative Example 6]

### (Joining Agent Q-6)

A reactor equipped with a stirrer, a reflux condenser, a gas introduction tube, and a thermometer was charged with 20 g of Phenotohto (registered trademark) YP-50S (available from Nippon Steel Chemical & Material Co., Ltd., phenoxy resin, weight average molecular weight: ca. 50,000) and 80 g of cyclohexanone, and the temperature was raised to 60°C while stirring. Dissolution was visually confirmed, and the mixture was cooled to 40°C to obtain a liquid joining agent Q-6 having a solid content of 20% by mass.

### (Step 1)

The joining agent Q-6 was coated on the columnar base material A to have a width of 5 mm, and after allowing to stand in an oven at 140°C for 30 minutes, cooled to room temperature to provide a base material with an adhesive layer.

### (Step 2)

A joined object was obtained in the same manner as in Example 1-1 except that the base material with an adhesive layer was used instead of the base material with a film.

### [Comparative Example 7]

A joined object was obtained in the same manner as in Example 1-1 except that a film Q-7, which was a polyethylene terephthalate film (available from Toyobo Co., Ltd., Toyobo Ester Film E-5100), was used instead of the film P-1.

### [Comparative Example 8]

### (Film Q-8)

A liquid and B liquid of a thermosetting liquid epoxy adhesive, Bond Quick 5 (available from Konishi Co., Ltd., two-component type, a bisphenol A type epoxy resin, and a thiol-based curing agent and an amine-based curing agent) were mixed and coated on a release film, cured at 100°C for 1 hour, then cooled, and released from the release film, so as to provide a film Q-8 having a thickness of 40 µm.

### (Step 1 and Step 2)

A joined object was obtained in the same manner as in the step 1 and the step 2 in Example 1-1 except that the film Q-8 was used instead of the film P-3.

### <Workability>

The workability was evaluated from the standpoint of the joining process time required in the step 1 and the handleability. In the case where a film was used in the step 1, the joining process time was shorter than the case using a solution, and the intermediate layer can be formed easily due to the absence of sagging and the like.

Therefore, the evaluation of workability in the case using a film was evaluated as good, and shown as "good" in Tables 1 and 2. The evaluation of workability in the case using a solution was inferior to the use of a film, and shown as "poor" in Tables 1 and 2.

### <Leakage Test>

As shown in 1-3 of Fig. 1, a silicone blade hose H (inner diameter: 9.5 mm, outer diameter: 16.5 mm) was inserted to each of the joined objects produced in Examples and Comparative Examples , and sealed by coating an adhesive for a silicone resin at the joint line between the resin C and the hose H and around the joint line. The cross sectional view of the joint line between the resin C and the hose H is shown in 1-4 of Fig. 1. Subsequently, a plug coupler was attached to the end of the hose H having no joined object attached, and connected to a compressor. After immersing the entire joined object at the end of the hose having the joined object attached thereto into water, air X was sent to the hose H in the direction toward the joined object at an air pressure of 0.1 MPaG, bubbles leaked to water were visually observed. The operation was performed for 10 joined objects produced in each of Examples and Comparative Examples, and the adhesiveness between the columnar base material A and the resin C was evaluated by the following evaluation standard. The evaluation results are shown in Tables 1 and 2.

In the case where no bubble in water is observed, the leakage amount of air can be assumed to be 1 mL/min or less.

### <Evaluation Standard>

A: No bubble was observed 10 times out of 10 times.
B: No bubble was observed 8 or 9 times out of 10 times.
C: No bubble was observed 5 to 7 times out of 10 times.
D: No bubble was observed 0 to 4 times out of 10 times.

### <Leakage Test after Thermal Cycle>

The joined objects produced in Examples and Comparative Examples each were subjected to a heat cycle of placing in atmospheres at 125°C and -40°C alternately in 1,000 cycles, and then subjected to the leakage test described above. The evaluation was performed by the same standard as the leakage test described above. The evaluation results are shown in Tables 1 and 2.

### [Table 1]

**Table 1**

| | | Example 1-1 | Example 1-2 | Example 1-3 | Example 2 | Example 3 |
|---|---|---|---|---|---|---|
| Intermediate layer | Resin main component | thermoplastic phenoxy resin | thermoplastic phenoxy resin | thermoplastic phenoxy resin | thermoplastic phenoxy resin | thermoplastic phenoxy resin |
| | Heat of fusion (J/g) | no melting peak | no melting peak | no melting peak | no melting peak | no melting peak |
| | Melting point X (°C) | 164 | 164 | 164 | 171 | 164 |
| | Glass transition temperature (°C) | 94 | 94 | 94 | 101 | 94 |
| | Peak value of tanδ | 2.4 | 2.4 | 2.4 | 1.9 | 1.5 |
| | Temperature of peak value of tanδ (°C) | 112 | 112 | 112 | 112 | 112 |
| | Evaluation of peak value of tanδ | A | A | A | A | A |
| | **Epoxy equivalent** (g/eq) | equal to or higher than detection limit | equal to or higher than detection limit | equal to or higher than detection limit | equal to or higher than detection limit | equal to or higher than detection limit |
| | Form | film | film | film | film | film |
| | Thickness (µm) | 40 | 40 | 40 | 40 | 40 |
| | Surface tackiness (23°C) | absent | absent | absent | absent | present |
| | Shear adhesion force (MPa) | 6.1 | 6.1 | 6.1 | 13.0 | 6.4 |
| Resin C | | PPS | PA6T | PC | PPS | PPS |
| Evaluation | Workability | good | good | good | good | good |
| | Leakage test | A | A | A | A | A |
| | Leakage test after thermal cycle | A | A | A | A | A |

**Table 1 (continued)**

| | | Example 4 | Example 5 | Example 6 | Example 7 |
|---|---|---|---|---|---|
| Intermediate layer | Resin main component | thermoplastic phenoxy resin | thermoplastic phenoxy resin | thermoplastic crystalline polyamide resin | thermoplastic phenoxy resin terpene phenol |
| | Heat of fusion (J/g) | no melting peak | no melting peak | 60 | no melting peak |
| | Melting point X (°C) | 164 | 165 | 101 | 159 |
| | Glass transition temperature (°C) | 94 | 95 | 45 | 99 |
| | Peak value of tanδ | 2.0 | 2.0 | 1.1 | 1.2 |
| | Temperature of peak value of tanδ (°C) | 112 | 117 | 67 | 110 |
| | Evaluation of peak value of tanδ | A | A | A | A |
| | Epoxy equivalent (g/eq) | equal to or higher than detection limit | equal to or higher than detection limit | equal to or higher than detection limit | equal to or higher than detection limit |
| | Form | film | film | film | film |
| | Thickness (µm) | 150 | 40 | 40 | 40 |
| | Surface tackiness (23°C) | absent | absent | absent | absent |
| | Shear adhesion force (MPa) | 6.1 | 14.4 | 4.4 | 11.0 |
| Resin C | | PPS | PPS | PPS | PPS |
| Evaluation | Workability | good | good | good | good |
| | Leakage test | A | A | A | A |
| | Leakage test after thermal cycle | A | A | C | A |

### [Table 2]

**Table 2**

| | | Comparative Example 1 | Comparative Example 2 | Comparative Example 3 | Comparative Example 4 |
|---|---|---|---|---|---|
| Intermediate layer | Resin main component | polycarbonate | thermoplastic phenoxy resin | thermoplastic phenoxy resin | thermosetting/ thermoplastic epoxy resin |
| | Heat of fusion (J/g) | no melting peak | no melting peak | no melting peak | no melting peak |
| | Melting point X (°C) | 220 | 157 | 164 | - |
| | Glass transition temperature (°C) | 150 | 87 | 94 | 93 |
| | Peak value of tanδ | 1.9 | 2.3 | 1.9 | 1.2 |
| | Temperature of peak value of tanδ (°C) | 167 | 100 | 120 | 112 |
| | Evaluation of peak value of tanδ | A | A | A | A |
| | Form | film | film | film | film |
| | Thickness (µm) | 100 | 40 | 40 | 40 |
| | Surface tackiness (23°C) | absent | present | present | absent |
| | Shear adhesion force (MPa) | 3.3 | 3.7 | 0.7 | 0 |
| Resin C | | PPS | PPS | PPS | PPS |
| Evaluation of measurement | Workability | good | good | good | good |
| | Leakage test | D | C | D | D |
| | Leakage test after thermal cycle | D | D | D | D |

**Table 2 (continued)**

| | | Comparative Example 5 | Comparative Example 6 | Comparative Example 7 | Comparative Example 8 |
|---|---|---|---|---|---|
| Intermediate layer | Resin main component | thermosetting epoxy resin | thermoplastic phenoxy resin | thermoplastic PET resin | thermosetting epoxy (amine/thiol curing) |
| | Heat of fusion (J/g) | no melting peak | no melting peak | 35 | no melting peak |
| | Melting point X (°C) | - | 164 | 260 | - |
| | Glass transition temperature (°C) | - | 94 | 94 | 35 |
| | Peak value of tanδ | 0.6 | 2.4 | 0.2 | 0.9 |
| | Temperature of peak value of tanδ (°C) | - | 112 | 67 | 47 |
| | Evaluation of peak value of tanδ | B | A | B | B |
| | Form | film | solution | film | film |
| | Thickness (µm) | 100 | 40 | 50 | 50 |
| | Surface tackiness (23°C) | absent | unable to test | absent | absent |
| | Shear adhesion force (MPa) | 0 | 7 | 4.5 | 9.5 |
| Resin C | | PPS | PPS | PPS | PPS |
| Evaluation of measurement | Workability | good | poor | good | good |
| | Leakage test | D | A | D | B |
| | Leakage test after thermal cycle | D | A | D | D |

### Industrial Applicability

The production method and the joined object of the present embodiment are applied, for example, to such applications as a terminal block, a bus bar, and an electric element of an automobile and an electric/electronic component, and also to such applications as a sealing member of a power module, and an electric/electronic component, such as a semiconductor package, but the application thereof is not particularly limited to the applications exemplified therein.

### Reference Sign List

a: non-attached portion of thermoplastic film B
A: columnar base material A
B: thermoplastic film B
C: resin C
H: hose
X: air
D: joined object

## Claims

1. A method for producing a joined object including a columnar base material A, a thermoplastic film B, and a resin C joined in this order,
the method comprising in this order:
a step 1 of winding the thermoplastic film B around at least a part of an outer periphery of the columnar base material A in a peripheral direction, and
a step 2 of joining the resin C to a part of the columnar base material A having the thermoplastic film B wound; wherein
the thermoplastic film B having a shear adhesion force to the columnar base material A at 80°C of 4.0 MPa or more, and
the thermoplastic film B having a peak value of tanδ of 1.0 or more in a temperature range of 0°C or more and 200°C or less on a temperature-tanδ curve in heating from 0°C to 200°C at a rate of 4°C/min at a measurement frequency of 10 Hz.

2. The method for producing a joined object according to claim 1, wherein the method further comprises a step of joining the columnar base material A and the thermoplastic film B by at least one kind selected from the group consisting of contact heating, hot air heating, hot pressing, infrared heating, hot plate welding, ultrasonic welding, vibration welding, and high-frequency induction welding.

3. The method for producing a joined object according to claim 1 or 2, wherein the thermoplastic film B has a thickness of 10 µm or more and 3 mm or less.

4. The method for producing a joined object according to claim 1 or 2, wherein the thermoplastic film B contains an amorphous thermoplastic resin in an amount exceeding 50% by mass.

5. The method for producing a joined object according to claim 4, wherein the amorphous thermoplastic resin is at least one kind selected from the group consisting of a thermoplastic epoxy resin and a phenoxy resin.

6. The method for producing a joined object according to claim 1 or 2, wherein the thermoplastic film B is a thermoplastic resin having an epoxy equivalent of 1,600 g/eq. or more or comprising no epoxy group.

7. The method for producing a joined object according to claim 1 or 2, wherein the columnar base material A is a metal.

8. An electric/electronic component comprising a joined object obtained by the method for producing a joined object according to claim 1 or 2.
